# FASCICULE DE BREVET EUROPEEN

(11) **EP 3 388 230 B1**
(45) Date de publication et mention de la délivrance du brevet: **20.10.2021**
(21) Numéro de dépôt: 18167008.4
(22) Date de dépôt: 12.04.2018
(51) Int. Cl.: B32B 5/02, B32B 5/06, B32B 7/08, B32B 9/00, B32B 13/02, B32B 13/04, B32B 13/10, B32B 13/14, B32B 19/04, B32B 3/06, B32B 3/08, B32B 3/26, B44F 9/02, E04F 13/00, E04F 13/08, E04F 13/14

(54) **PANNEAU DE REVÊTEMENT ET PROCÉDÉ DE FABRICATION D'UN PANNEAU DE REVÊTEMENT**
VERKLEIDUNGSPANEEL UND HERSTELLUNGSVERFAHREN EINES VERKLEIDUNGSPANEELS
SKIN PANEL AND METHOD FOR MANUFACTURING A SKIN PANEL

(30) Priorité: 12.04.2017 DE 202017102223 U; 09.08.2017 FR 1757619
(43) Date de publication de la demande: 17.10.2018
(73) Titulaire: Gitzhofer, Christoph, 66129 Saarbrücken Büblingen (DE)
(72) Inventeur: Gitzhofer, Christoph, 66129 Saarbrücken Bübingen (DE)
(74) Mandataire: Vièl, Frédérique

(56) Documents cités:
- WO-A1-02/33191
- FR-A1- 2 537 628

## Description

L'invention concerne un panneau de revêtement, notamment en fibres de basalte, et un procédé de fabrication d'un tel panneau de revêtement.

Le document DE 10 2006 048 912 A1 décrit un panneau bidimensionnel ayant une structure textile réalisée à base de fibres minérales ou d'une combinaison de fibres organiques et de fibres minérales, et qui est traitée avec au moins un liant afin d'obtenir une structure textile modifiée qui est ensuite recouverte de métaux par dépôt en phase gazeuse. Des fibres appropriées sont des fibres de verre, de carbone, de silicate, notamment de silicate d'aluminium, de céramique ou de basalte. Des liants appropriés sont des polysiloxanes, mais également des matières plastiques performantes, telles que l'EPDM (éthylène-propylène-diène monomère), le PFA (perfluoroalkoxy), le PMMA (polyméthacrylate de méthyle), le POM (polyoxyméthylène), le PEEK (polyétheréthercétone), le PVA (poly(acétate de vinyle)), des résines époxy et des polymères hybrides. Les panneaux bidimensionnels sont utilisés comme protection thermique, notamment dans le domaine de l'automobile, pour protéger des éléments thermosensibles contre la chaleur émise par d'autres éléments.

Le document DE 10 2013 101 521 A1 décrit un panneau bidimensionnel, comprenant au moins une couche de matériau dont la face visible est munie d'un aspect structuré. La couche de matériau consiste en une masse de consistance tout d'abord visqueuse ou pâteuse à laquelle est conféré un aspect structuré et qui est ensuite durcie. On donne à la couche de matériau une surface structurée prédéfinie d'un modèle de base, qui peut être par exemple une structure de bois ou de pierre.

WO0233191 A1 divulgue un panneau cimenté, destiné à être fixé à sur un cadre de mur ou un mur, doté d'une toile de renforcement contenant de la fibre de basalte intégrée sur au moins une surface principale, et de préférence sur les deux surfaces principales du panneau, qui se présentent de préférence sous forme d'un maillage ou d'un canevas constitué de mèches de fibre de basalte espacées à la fois dans le sens de la chaîne et de la trame ou bien de tissus tissés ou non tissés en fibre de basalte, comportant des fibres et/ou des microfibres alignées ou orientées au hasard, d'une longueur telle que les tissus offrent suffisamment d'espace libre pour permettre à un matériau noyau en ciment de pénétrer dans ledit tissu, lorsque celui-ci est intégré sur une ou deux surfaces principales du panneau cimenté et avant que le matériau noyau en ciment ne durcisse. La couche centrale cimentée est à base de ciment Portland et de particules de quartz de sable.

FR2537628 A1 décrit un complexe d'isolation thermique par l'extérieur pour murs extérieurs d'un bâtiment, destiné à être posé contre la face extérieure d'un tel mur, ce complexe comportant une couche d'un matériau isolant thermique (typiquement en polystyrène expansé) collé sur la surface extérieure du mur et fixée à ce dernier à l'aide d'éléments de fixation mécaniques disposés de place en place, ainsi qu'une couche d'un enduit de parement extérieur, caractérisé en ce que l'élément de fixation est une cheville comportant à l'une de ses extrémités une rondelle de fort diamètre sur laquelle fait saillie un capuchon en forme de champignon à tête plate, la rondelle de fort diamètre s'appliquant contre la face extérieure de la couche de matériau isolant de façon à étroitement appliquer ce matériau contre le mur par l'intermédiaire du corps de la cheville qui est logé à force dans un trou préalablement percé dans le mur, le capuchon étant noyé dans l'épaisseur de la couche d'enduit de parement extérieur qui est directement appliquée sur la couche de matériau isolant thermique. La rondelle est étoilée et comporte en son centre un trou recevant par clipsage le capuchon. L'enduit de parement est à base de ciment, de charge(s) minérale(s) ou organique(s), de fibres minérales. L'objectif de la présente invention est de créer un panneau de revêtement selon le préambule qui puisse servir de revêtement pour un support tel qu'un mur ou un plafond, et qui puisse être facilement monté et démonté.

Cet objectif est atteint conformément à l'invention du fait que le panneau de revêtement comprend
- une couche bi- ou tridimensionnelle en fibres de basalte,
- des capuchons placés dans des ouvertures réalisées dans la couche de fibres de basalte à laquelle ils sont fixés, lesdits capuchons étant conçus pour pouvoir être fixés par clipsage sur un élément de fixation du type bouton-pression, et
- un enduit rigidifiant de préférence à base de céramique, de béton, de résines synthétiques et/ou de pigments colorés, appliqué sur la couche en fibres de basalte.

Grâce à la présence des capuchons clipsables, on obtient un panneau de revêtement qui peut être facilement monté et démonté sur des murs ou des plafonds. Les ouvertures et les capuchons sont répartis sur la surface du panneau de revêtement de telle manière que celui-ci peut être fixé et maintenu en toute sécurité. Les matériaux d'enduction sont appliqués sur la couche en fibres de basalte afin de former la surface du panneau de revêtement.

La couche en fibres de basalte se présente de préférence sous forme de tissu, de treillis, de tricot, de tissu à mailles ou de non-tissé en fibres de basalte.

La couche en fibres de basalte forme une nappe qui peut être aussi bien bidimensionnelle (donc plane) que tridimensionnelle (par exemple avec des reliefs ou en arc de cylindre).

Conformément à l'invention, l'enduit contient des particules d'aluminium, des particules de verre, des particules de sable, notamment des particules de sable de quartz, des particules de roches moulues, des particules de ciment, des particules de basalte, des particules de polystyrène, des particules de polyester, des fibres de polyester, des fibres de basalte et/ou des pigments colorés.

Ces composants permettent de modifier la structure et l'aspect superficiel de l'enduit. On utilise des particules de polystyrène et de polyester, ainsi que des fibres de polyester lorsque le panneau de revêtement n'a pas besoin d'être résistant au feu ; avec tous les autres matériaux d'enduction, il est possible d'obtenir un panneau de revêtement ignifuge.

L'enduit peut contenir des résines synthétiques choisies parmi le groupe comprenant les résines phénoliques, les aminoplastes, les résines époxy, les résines polyester, les résines ABS, les résines acryliques, les résines alkydes, les résines polyuréthane, les résines polyamide et les résines de vinylester.

Dans une version préférée de l'invention, les capuchons présentent un bord débordant se prolongeant par une partie cylindrique, la partie cylindrique de chaque capuchon s'étendant à travers une ouverture de telle sorte que les bords débordants soient tous en appui contre une même face de la couche de fibres de basalte, à savoir la face recouverte de l'enduit, ou l'une des faces enduites si les deux faces sont enduites.

Dans une variante privilégiée de l'invention, la partie cylindrique du capuchon est conçue pour être fixée par clipsage à la tête d'un élément de fixation du type bouton-pression.

L'élément de fixation de type bouton-pression pénètre par exemple dans la partie intérieure de la partie cylindrique du capuchon et s'y clipse grâce à des moyens de clipsage. Il est également possible de prévoir que l'élément de fixation de type bouton-pression se clipse sur la face extérieure de la partie cylindrique du capuchon. De préférence, la fixation par clipsage entre l'élément de fixation de type bouton-pression et le capuchon peut être défaite. Le capuchon constitue l'un des deux éléments de la fermeture de type bouton-pression, l'élément de fixation constituant l'autre élément.

On peut prévoir que la partie cylindrique des capuchons saille sur l'autre face de la couche en fibres de basalte, auquel cas un anneau de maintien peut être fixé sur la face extérieure de la partie cylindrique saillant de la couche en fibres de basalte.

Ce capuchon peut être fixé facilement et rapidement sur le panneau de revêtement en passant la partie cylindrique du capuchon à travers l'ouverture jusqu'à ce que le bord débordant touche le panneau de revêtement. Le capuchon est ensuite maintenu de l'autre côté par un anneau.

Dans ce contexte, il est avantageux de disposer des moyens de clipsage ou un pas de vis sur la face extérieure de la partie cylindrique.

L'anneau est ensuite glissé sur la face extérieure de la partie cylindrique jusqu'à ce qu'il se clipse, ou il présente un pas de vis intérieur qui est vissé sur le pas de vis extérieur de la partie cylindrique du capuchon.

L'élément de fixation peut présenter à son extrémité opposée à celle remplissant la fonction de bouton-pression un pas de vis permettant de le fixer au mur ou au plafond, par exemple en le vissant dans une cheville.

Dans une amélioration de l'invention, le panneau de revêtement est muni de canaux pour des conduites.

On peut placer dans ces canaux notamment des conduites électriques ou des conduites d'eau, voire les éléments d'une climatisation.

Par ailleurs, il est possible de prévoir des moyens de liaison pour relier les panneaux de revêtement entre eux.

Dans ce contexte, il est avantageux que les moyens de liaison pour relier les panneaux de revêtements entre eux soient des fermetures à glissière de type fermeture Éclair®, des boutons-pression, des bandes autoagrippantes de type Velcro® et/ou des ferrures.

Dans une variante privilégiée de l'invention, il est prévu d'intégrer dans le panneau de revêtement des composants électriques et/ou électroniques, notamment des puces RFID, des DEL, des radiateurs à rayonnement infrarouge et/ou des éléments photovoltaïques.

Il est possible de transmettre des informations via des puces RFID, tandis que les DEL peuvent aussi bien servir à l'éclairage qu'à la coloration des panneaux de revêtement. Les radiateurs à rayonnement infrarouge permettent d'émettre de la chaleur et les éléments photovoltaïques peuvent assurer l'alimentation en courant électrique des autres composants électroniques.

L'invention concerne également un procédé pour la fabrication d'un panneau de revêtement comprenant les étapes suivantes :
a) préparation d'une couche bi- ou tridimensionnelle en fibres de basalte,
b) réalisation d'ouvertures dans la couche en fibres de basalte à travers de chacune desquelles est placé un capuchon qui est fixé sur la couche en fibres de basalte, et
c) application sur la couche en fibres de basalte d'un enduit rigidifiant, de préférence à base de céramique, de béton, de résines synthétiques et/ou de pigments colorés.

L'enduit peut être appliqué soit sur une seule face de la couche en fibres de basalte, soit sur les deux faces de celle-ci. L'enduit peut contenir des particules d'aluminium, des particules de verre, des particules de sable, notamment des particules de sable de quartz, des particules de roches moulues, des particules de ciment, des particules de basalte, des particules de polystyrène, des particules de polyester, des fibres de polyester, des fibres de basalte et/ou des pigments colorés. L'enduit peut également contenir des résines synthétiques choisies parmi le groupe comprenant les résines phénoliques, les aminoplastes, les résines époxy, les résines polyester, les résines ABS, les résines acryliques, les résines alkydes, les résines polyuréthane, les résines polyamide et les résines de vinylester.

Conformément à l'invention, il est prévu, avant ou après l'étape b), de donner à la couche en fibres de basalte la forme souhaitée au moyen de coutures, de rivets, d'œillets, de boutons-pression, de fermetures à glissière de type fermeture Éclair®, de fils de fer, de cintres, de baguettes, d'agrafes et/ou de colle.

Dans un développement du procédé, il est prévu, avant ou après l'étape c), de fixer par clipsage chaque capuchon à un élément de fixation du type bouton-pression fixé sur un support, par exemple un mur ou un plafond.

Il est également possible de conférer à la surface de l'enduit un aspect structuré, notamment un aspect de bois ou de pierre.

Dans ce contexte, on peut envisager n'importe quel aspect structuré de la surface du panneau de revêtement, et il est notamment possible d'appliquer des couches de matériaux naturels sur la surface du panneau de revêtement, tel qu'une feuille de placage en bois, par exemple une feuille de placage en chêne, hêtre, châtaignier ou noyer. Une autre solution consiste à y appliquer une feuille de placage en pierre, par exemple une feuille de placage en ardoise, basalte, granite ou grès. Il est également possible d'appliquer des couches plus épaisses de bois ou de pierre sur la surface du panneau de revêtement, par exemple une couche de sel, par exemple de sel de l'Himalaya.

Si le placage ou la couche de bois ou de pierre est suffisamment fin, des DEL placées derrière le placage ou la couche permettent d'illuminer cette couche.

Une autre amélioration de l'invention consiste à fixer sur un support, par exemple un mur ou un plafond, plusieurs panneaux de revêtement après l'étape b), puis à exécuter l'étape c), l'enduit remplissant également les jointures entre les panneaux de revêtement.

Ceci permet de réaliser à partir des panneaux de revêtement un revêtement continu imperméable à l'eau.

Il est également possible de fixer, à distance l'un de l'autre, deux premiers panneaux de revêtement sur un support tel qu'un mur ou un plafond, puis de placer un troisième panneau de revêtement par-dessus les deux premiers de telle sorte que certains de ses bords latéraux chevauchent certains des bords latéraux des deux premiers panneaux de revêtement. Le troisième panneau de revêtement peut être fixé directement au support par ses capuchons et/ou aux deux premiers panneaux de revêtement par des moyens de liaison.

Dans la suite, des exemples d'application de l'invention sont expliqués plus en détail en faisant référence aux dessins.
- La figure 1a: montre un capuchon, un anneau et un élément de fixation selon l'invention,
- la figure 1b: montre un panneau de revêtement selon l'invention,
- la figure 2a: montre deux panneaux de revêtement placés côte à côte, et
- la figure 2b: montre trois panneaux de revêtement placés de façon décalée les uns par rapport aux autres.

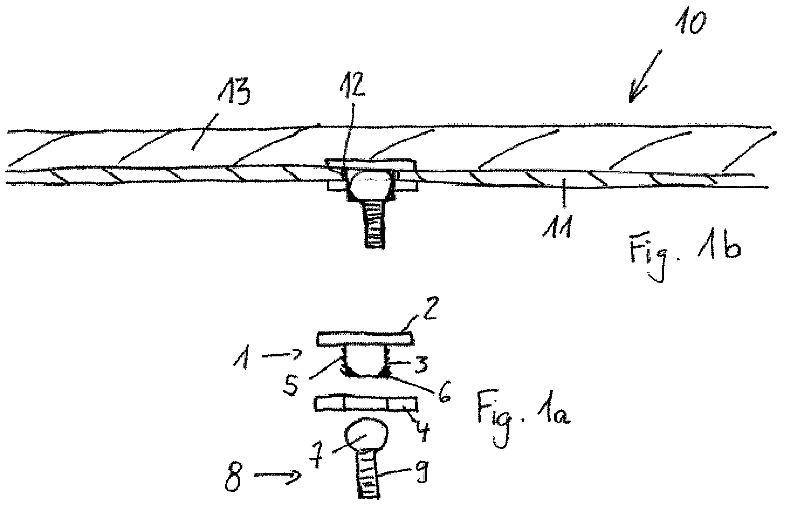

Comme le montre la figure 1a, le capuchon (1) selon l'invention présente un bord débordant (2) se prolongeant sur une de ses faces par une partie cylindrique (3). Il est possible de fixer un anneau (4) sur la face extérieure de la partie cylindrique (3) du capuchon (1), par exemple grâce à des ergots de clipsage (5). La partie intérieure de la partie cylindrique (3) forme une cavité qui est ouverte du côté opposé du bord débordant et et qui est munie d'éléments de clipsage (6) situés près de l'ouverture de celle-ci.

La tête (7) d'un élément de fixation (8) de type bouton-pression peut être introduite dans la cavité ouverte. Cette tête (7) est retenue dans la position de fixation par les éléments de clipsage (6) et elle ne peut être ressortie de la cavité qu'en surmontant la force de retenue des ergots de clipsage sans qu'elle soit endommagée. L'extrémité (9) de l'élément de fixation (8) opposée à la tête (7) sert à fixer celui-ci dans un mur ou un plafond et peut par exemple présenter un pas de vis.

La figure 1b montre un panneau de revêtement (10) selon l'invention.

Un tel panneau de revêtement (10) est fabriqué en réalisant des ouvertures (12) dans un tissu en fibres de basalte (11) (par exemple 150 g/m², disponible auprès de la société Time Out Composite OHG, Ottostraβe 119, 53332 Bornheim-Sechtem, Allemagne). Ces ouvertures (12) servent à la mise en place de capuchons pour la fixation du panneau de revêtement (10) sur un support tel qu'un mur ou un plafond.

La partie cylindrique (3) d'un capuchon (1) tel que présenté en figure 1a est passée à travers l'une des ouvertures (12) jusqu'à ce que le bord débordant (2) touche une première face de la couche en fibres de basalte (11). Le bord débordant (2) peut présenter des perforations qui permettent de réduire les dimensions du bord dépassant (2) pour l'adapter à la taille requise pour l'application envisagée en éliminant manuellement le matériau non nécessaire. La partie cylindrique (3) dépasse de l'autre face de la couche en fibres de basalte.

Le capuchon (1) est fixé sur le panneau de revêtement (10) en glissant un anneau (4) sur la face extérieure de la partie cylindrique (3) et le retenant par les ergots (5). Cet anneau est en appui contre la deuxième face de la couche en fibre de basalte, celle-ci étant ainsi coincée entre le bord débordant (2) et l'anneau (4).

De ce fait, le capuchon (1) est fermement relié au panneau de revêtement (10).

Un enduit (13), par exemple à base de béton, est ensuite appliqué sur la couche en fibres de basalte (11). Un aspect structuré, par exemple de type aspect pierre, est réalisé sur la surface de l'enduit à l'aide d'un moule. La face extérieure des capuchons (1) opposée à la partie cylindrique peut être rendue rugueuse ou un apprêt peut être appliqué dessus afin de faciliter l'adhésion de l'enduit sur les capuchons (1). Les capuchons sont ainsi cachés derrière la couche d'enduit.

Après le durcissement de l'enduit (13), le panneau de revêtement (10) peut être fixé de manière réversible au mur ou au plafond au moyen des éléments de fixation (8).

Afin de pouvoir fixer le panneau de revêtement (10) sur un mur ou un plafond, la tête (7) de l'élément de fixation (8) de type bouton-pression est introduite dans la cavité de la partie cylindrique (3) et s'y clipse grâce aux éléments de clipsage (6) créant ainsi une fixation réversible entre l'élément de fixation (8) de type bouton-pression et le capuchon (1).

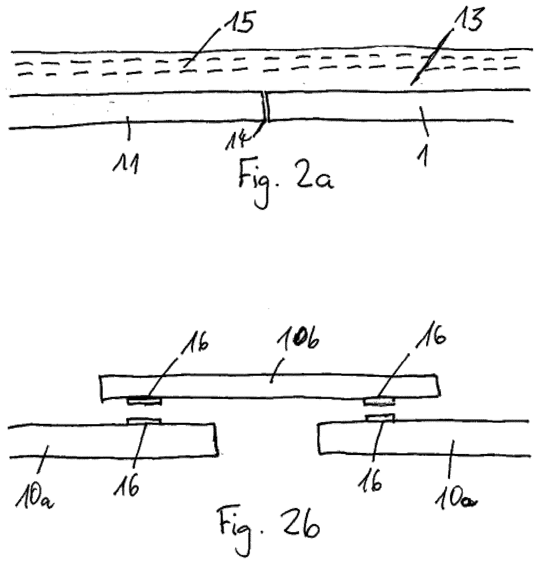

La figure 2a montre une autre variante du procédé. Tout d'abord, deux tissus en fibres de basalte sont préparés et des ouvertures (12) sont réalisées. Des capuchons (1) sont placés dans les ouvertures et fixés aux tissus en fibres de basalte par des anneaux (4). Les deux tissus en fibres de basalte (11) sont ensuite fixés sur un mur ou un plafond au moyen des capuchons (1) et des éléments de fixation (8) ancrés dans le mur ou le plafond, un interstice (14) subsistant entre les bords adjacents des deux tissus en basalte (11). Ce n'est qu'après la fixation des tissus en fibres de basalte (11) au mur ou au plafond que l'enduit (13) est appliqué dessus et que l'interstice est bouché pour éviter que de l'eau ne pénètre à travers les panneaux de revêtement (10) ou les interstices (14).

Par ailleurs, la figure 2a montre un canal (15) qui passe à travers les panneaux de revêtement (10) et dans lequel peuvent être placés des câbles ou d'autres conduites.

La figure 2b montre deux panneaux de revêtement (10a) fixés sur un support tel qu'un mur ou un plafond, à distance l'un de l'autre. Un troisième panneau de revêtement (10b) est ensuite placé par-dessus les deux premiers panneaux (10a), certains de ses bords latéraux chevauchant certains des bords latéraux des deux premiers panneaux de revêtement (10a). Le troisième panneau de revêtement (10b) peut être fixé directement au support par ses capuchons (1). Il peut aussi comme cela est montré ici être fixé aux deux premiers panneaux de revêtement (10a) par des moyens de liaison (16). Comme moyens de liaison (16) on peut prévoir des bandes autoagrippantes de type Velcro®, des fermetures à glissières de type fermetures Éclair® des boutons-pression ou tous autres moyens de fixation similaires.

## Revendications

1. Panneau de revêtement (10), **caractérisé en ce qu'il** comprend
• une couche bi- ou tridimensionnelle en fibres de basalte (11),
• des capuchons (1) placés dans des ouvertures (12) réalisées dans la couche de fibres de basalte (11) à laquelle ils sont fixés, lesdits capuchons étant conçus pour pouvoir être fixés par clipsage sur un élément de fixation (8) du type bouton-pression, et
• un enduit (13) rigidifiant appliqué sur la couche en fibres de basalte (11).

2. Panneau de revêtement (10) selon la revendication 1, **caractérisé en ce que** l'enduit (13) est à base de céramique, de béton, de résines synthétiques et/ou de pigments colorés.

3. Panneau de revêtement (10) selon la revendication 1 ou 2, **caractérisé en ce que** la couche (11) en fibres de basalte se présente sous la forme de tissu, de treillis, de tricot, de tissu à mailles ou de non-tissé en fibres de basalte.

4. Panneau de revêtement (10) selon l'une des revendications précédentes, **caractérisé en ce que** l'enduit contient des particules d'aluminium, des particules de verre, des particules de sable, notamment des particules de sable de quartz, des particules de roches moulues, des particules de ciment, des particules de basalte, des particules de polystyrène, des particules de polyester, des fibres de polyester, des fibres de basalte et/ou des pigments colorés.

5. Panneau de revêtement (10) selon l'une des revendications précédentes, **caractérisé en ce que** l'enduit (13) contient des résines synthétiques choisies parmi le groupe comprenant les résines phénoliques, les aminoplastes, les résines époxy, les résines polyester, les résines ABS, les résines acryliques, les résines alkydes, les résines polyuréthane, les résines polyamide et les résines de vinylester.

6. Panneau de revêtement (10) selon l'une des revendications précédentes, **caractérisé en ce que** les capuchons (1) présentent un bord débordant (2) se prolongeant par une partie cylindrique (3), la partie cylindrique de chaque capuchon s'étendant à travers une ouverture (12) de telle sorte que les bords débordants (2) soient tous en appui contre une même face de la couche de fibres de basalte, la partie cylindrique (3) du capuchon étant de préférence conçue pour être fixée par clipsage à la tête (7) d'un élément de fixation (8) du type bouton-pression.

7. Panneau de revêtement selon la revendication précédente, **caractérisé en ce que** la partie cylindrique (3) des capuchons saille sur l'autre face de la couche en fibres de basalte (1), un anneau de maintien (4) étant fixé sur la face extérieure de la partie cylindrique (3) saillant de la couche en fibres de basalte, des moyens de clipsage (5) ou un pas de vis étant de préférence prévus sur la face extérieure de la partie cylindrique (3).

8. Panneau de revêtement (10) selon l'une des revendications précédentes, **caractérisé en ce que** des canaux (15) pour des conduites sont prévus dans le panneau de revêtement (10).

9. Panneau de revêtement (10) selon l'une des revendications précédentes, **caractérisé en ce que** des moyens de liaison (16) sont prévus pour relier les panneaux de revêtement (10) entre eux, les moyens de liaison (16) étant de préférence constitués par des fermetures à glissière de type fermeture Éclair®, des boutons-pression, des bandes autoagrippantes de type Velcro® et/ou des ferrures.

10. Panneau de revêtement (10) selon l'une des revendications précédentes, **caractérisé en ce que** des composants électriques et/ou électroniques sont intégrés dans le panneau de revêtement (10), notamment des puces RFID, des DEL, des radiateurs à rayonnement infrarouge et/ou des éléments photovoltaïques.

11. Procédé pour la fabrication d'un panneau de revêtement (10), **caractérisé par** les étapes suivantes :
a) préparation d'une couche (11) bi- ou tridimensionnelle en fibres de basalte,
b) réalisation d'ouvertures (12) dans la couche (11) en fibres de basalte à travers de chacune desquelles est placé un capuchon (1) qui est fixé à la couche en fibres de basalte, ledit capuchon étant conçu pour pouvoir être fixé par clipsage sur un élément de fixation de type bouton-pression, et
c) application sur la couche en fibre de basalte d'un enduit (13) rigidifiant, de préférence à base de céramique, de béton, de résines synthétiques et/ou de pigments colorés.

12. Procédé selon la revendication précédente, **caractérisé en ce qu'**avant ou après l'étape b), la couche (11) en fibres de basalte est préparée pour lui donner la forme souhaitée au moyen de coutures, de rivets, d'œillets, de boutons-pression, de fermetures à glissière de type fermetures Éclair®, de fils de fer, de cintres, de baguettes, d'agrafes et/ou de colle.

13. Procédé selon la revendication 11 ou 12, **caractérisé en ce qu'**avant ou après l'étape c), chaque capuchon (1) est fixé par clipsage à un élément de fixation (8) du type bouton-pression fixé sur un support.

14. Procédé selon l'une des revendications 11 à 13, **caractérisé en ce qu'**un aspect structuré est conféré à la surface de l'enduit (13), notamment un aspect de bois ou de pierre, de préférence par application de couches de matériau et/ou par application de feuilles de placage.

15. Procédé selon l'une des revendications 11 à 14, **caractérisé en ce que** plusieurs panneaux de revêtement sont fixés sur un support après l'étape b), puis l'étape c) est exécutée, l'enduit remplissant également les jointures entre les panneaux de revêtement.

16. Procédé selon l'une des revendications 11 à 14, **caractérisé en ce que** deux premiers panneaux de revêtement (10a) sont fixés sur un support à distance l'un de l'autre, puis un troisième panneau de revêtement (10b) est placé par-dessus les deux premiers panneaux (10a), certains de ses bords latéraux chevauchant certains des bords latéraux des deux premiers panneaux de revêtement (10a), le troisième panneau de revêtement (10b) étant fixé directement au support par ses capuchons (1) et/ou aux deux premiers panneaux de revêtement (10a) par des moyens de liaison (16).

## Patentansprüche

1. Verkleidungspaneel (10), **dadurch gekennzeichnet, dass** es folgendes umfasst:
• eine zwei- oder dreidimensionale Schicht aus Basaltfasern (11),
• Kappen (1), die in Durchbrechungen (12) in der Schicht aus Basaltfasern (11) angeordnet und in ihr befestigt sind, wobei die Kappen ausgebildet sind, um durch Einrasten an einem druckknopfartigen Befestigungspaneel (8) befestigt zu werden und
• eine versteifende Beschichtung (13), die auf die Schicht aus Basaltfasern (11) aufgebracht ist.

2. Verkleidungspaneel (10) gemäß Anspruch 1, **dadurch gekennzeichnet, dass** die Beschichtung (13) keramikbasiert, betonbasiert, kunstharzbasiert und/oder farbpigmentbasiert ist.

3. Verkleidungspaneel (10) gemäß Anspruch 1, **dadurch gekennzeichnet, dass** die Schicht aus Basaltfasern (11) als Gewebe, Geflecht, Gestrick, Gewirk oder Vlies aus Basaltfasern (11) ausgestaltet ist.

4. Verkleidungspaneel (10) gemäß einem der vorhergehenden Ansprüche, **dadurch gekennzeichnet, dass** die Beschichtung Aluminiumpartikel, Glaspartikel, Sandpartikel, insbesondere Quarzsandpartikel, Steinmehlpartikel, Zementpartikel, Basaltpartikel, Polystyrolpartikel, Polyesterpartikel, Polyesterfaser, Basaltfasern und/oder Farbpigmente enthält.

5. Verkleidungspaneel (10) gemäß einem der vorhergehenden Ansprüche, **dadurch gekennzeichnet, dass** die Beschichtung (13) Kunstharze enthält, die aus der Gruppe umfassend Phenolharze, Aminoplaste, Epoxydharze, Polyesterharze, ABS-Harze, Acrylharze, Alkydharze, Polyurethanharze, Polyamidharze und Vinylesterharze ausgewählt sind.

6. Verkleidungspaneel (10) gemäß einem der vorhergehenden Ansprüche, **dadurch gekennzeichnet, dass** die Kappen (1) einen überstehenden Rand (2) aufweisen, der in einen zylindrischen Bereich (3) übergeht, wobei sich der zylindrische Bereich jeder Kappe durch eine Durchbrechung (12) so erstreckt, dass die überstehenden Ränder (2) alle an der gleichen Seite der Schicht aus Basaltfasern anliegen, wobei der zylindrische Bereich (3) der Kappe vorzugsweise ausgebildet ist, um durch Einrasten am Kopf (7) eines druckknopfartigen Befestigungselementes (8) befestigt zu werden.

7. Verkleidungspaneel gemäß dem vorhergehenden Anspruch, **dadurch gekennzeichnet, dass** der zylindrische Bereich (3) der Kappen an der anderen Seite der Schicht aus Basaltfasern (1) übersteht, wobei ein Haltering (4) auf der Außenseite des aus der Schicht aus Basaltfasern überstehenden zylindrischen Bereichs (3) befestigt ist, wobei vorzugsweise Einrastmittel (5) oder ein Gewindegang an der Außenseite des zylindrischen Bereichs vorgesehen sind.

8. Verkleidungspaneel (10) gemäß einem der vorhergehenden Ansprüche, **dadurch gekennzeichnet, dass** in dem Verkleidungspaneel (10) Kanäle (15) für Leitungen angeordnet sind.

9. Verkleidungspaneel (10) gemäß einem der vorhergehenden Ansprüche, **dadurch gekennzeichnet, dass** Verbindungsmittel (16) zum Verbinden der Verkleidungspaneele (10) untereinander vorgesehen sind, wobei die Verbindungsmittel (16) als Reißverschlüsse der Art "Fermeture Éclair®", Druckknöpfe, Klettverschlüsse der Art Velcro® oder als Beschläge ausgebildet sind.

10. Verkleidungspaneel (10) gemäß einem der vorhergehenden Ansprüche, **dadurch gekennzeichnet, dass** in das Verkleidungspaneel (10) elektronische Bauelemente, insbesondere RFID-Chips, LEDs, Infrarotheizelemente und/oder Photovoltaikelemente, integriert sind.

11. Verfahren zum Herstellen eines Verkleidungspaneels (10), **gekennzeichnet durch** folgende Verfahrensschritte:
a) Bereitstellen einer zwei- oder dreidimensionalen Schicht (11) aus Basaltfasern,
b) Einbringen von Durchbrechungen (12) in die Schicht (11) aus Basaltfasern, durch die sich erstreckend jeweils eine Kappe (1) angeordnet wird, welche an der Schicht aus Basaltfasern befestigt wird, wobei die Kappe ausgebildet ist, um durch Einrasten an einem druckknopfartigen Befestigungselement befestigt zu werden, und
c) Aufbringen auf die Schicht aus Basaltfasern einer versteifenden Beschichtung (13), vorzugsweise einer keramikbasierten, betonbasierten, kunstharzbasierten oder farbpigmentbasierten versteifenden Beschichtung.

12. Verfahren gemäß dem vorhergehenden Anspruch, **dadurch gekennzeichnet, dass** vor oder nach dem Schritt b) die Schicht (11) aus Basaltfasern mit Nähten, Nieten, Ösen, Druckknöpfen, Reißverschlüssen der Art "Fermeture Eclair®", Drähten, Bügeln, Leisten, Heftklammern und/oder Klebstoff in die jeweils gewünschte Form gebracht wird.

13. Verfahren gemäß Anspruch 11 oder 12, **dadurch gekennzeichnet, dass** vor oder nach dem Schritt c) jede Kappe (1) durch Einrasten an einem druckknopfartigen Befestigungselement (8) befestigt wird, das an einer Unterlage befestigt ist.

14. Verfahren gemäß einem der Ansprüche 11 bis 13, **dadurch gekennzeichnet, dass** die Beschichtung (13) an ihrer Oberfläche mit einer Strukturierung versehen wird, insbesondere einer Holz- oder Steinstrukturierung, vorzugsweise durch Aufbringen von Materialschichten und/oder durch Aufbringen von Furnierblättern.

15. Verfahren gemäß einem der Ansprüche 11 bis 14, **dadurch gekennzeichnet, dass** mehrere Verkleidungspaneele nach Schritt b) auf einer Unterlage befestigt werden und dann Schritt c) ausgeführt wird, wobei die Beschichtung auch die Fugen zwischen den Verkleidungspaneelen ausfüllt.

16. Verfahren gemäß einem der Ansprüche 11 bis 14, **dadurch gekennzeichnet, dass** zwei erste Verkleidungspaneele (10a) auf einer Unterlage voneinander beabstandet befestigt werden, dann ein drittes Verkleidungspaneel (10b) über den beiden ersten Verkleidungspaneelen (10a) angeordnet wird, wobei einige seiner seitlichen Kanten sich mit einigen seitlichen Kanten der beiden ersten Verkleidungspaneele (10a) überlappen, wobei das dritte Verkleidungspaneel (10b) direkt an der Unterlage mittels seiner Kappen (1) und/oder an den ersten beiden Verkleidungspaneelen (10a) über Verbindungsmittel (16) befestigt wird.

## Claims

1. Covering panel (10), **characterised in that** it comprises
• a two- or three-dimensional layer of basalt fibres (11),
• caps (1) placed in openings (12) made in the layer of basalt fibres (11) to which they are attached, said caps being designed to be able to be attached by snapping onto an attachment element (8) of the press stud type, and
• a stiffening coating (13) applied to the layer of basalt fibres (11).

2. Covering panel (10) according to claim 1, **characterised in that** the coating (13) is based on ceramic, concrete, synthetic resins and/or coloured pigments.

3. Covering panel (10) according to claim 1 or 2, **characterised in that** the layer (11) of basalt fibres is in the form of fabric, lattice, knitted fabric, mesh fabric or non-woven fabric made from basalt fibres.

4. Covering panel (10) according to one of the preceding claims, **characterised in that** the coating contains aluminium particles, glass particles, sand particles, in particular quartz sand particles, ground rock particles, cement particles, basalt particles, polystyrene particles, polyester particles, polyester fibres, basalt fibres and/or coloured pigments.

5. Covering panel (10) according to one of the preceding claims, **characterised in that** the coating (13) contains synthetic resins selected from the group comprising phenolic resins, aminoplasts, epoxy resins, polyester resins, ABS resins, acrylic resins, alkyd resins, polyurethane resins, polyamide resins and vinyl ester resins.

6. Covering panel (10) according to one of the preceding claims, **characterised in that** the caps (1) have a projecting edge (2) extended by a cylindrical part (3), the cylindrical part of each cap extending through an opening (12) so that the projecting edges (2) are all in abutment against the same face of the layer of basalt fibres, the cylindrical part (3) of the cap preferably being designed so as to be attached by snapping onto the head (7) of an attachment element (8) of the press stud type.

7. Covering panel according to the preceding claim, **characterised in that** the cylindrical part (3) of the caps projects on the other face of the layer of basalt fibres (1), a holding ring (4) being attached to the external face of the cylindrical part (3) projecting from the layer of basalt fibres, snapping-on means (5) or a screw thread preferably being provided on the external face of the cylindrical part (3).

8. Covering panel (10) according to one of the preceding claims, **characterised in that** channels (15) for conduits are provided in the covering panel (10).

9. Covering panel (10) according to one of the preceding claims, **characterised in that** connection means (16) are provided for connecting the covering panels (10) to each other, the connection means (16) preferably consisting of zip fasteners of the Eclair® fastener type, press studs, self-gripping strips of the Velcro® type and/or brackets.

10. Covering panel (10) according to one of the preceding claims, **characterised in that** electrical and/or electronic components are integrated in the covering panel (10), in particular RFID chips, LEDs, infrared heaters and/or photovoltaic elements.

11. Method for manufacturing a covering panel (10), **characterised by** the following steps:
a) preparing a two- or three-dimensional layer (11) of basalt fibres,
b) producing openings (12) in the layer (11) of basalt fibres, through each of which a cap (1) is placed that is attached to the layer of basalt fibres, said cap being designed to be able to be attached by snapping onto an attachment element of the press stud type, and
c) applying, to the layer of basalt fibre, a stiffening coating (13), preferably based on ceramic, concrete, synthetic resins and/or coloured pigments.

12. Method according to the preceding claim, **characterised in that,** before or after step b), the layer (11) of basalt fibres is prepared to give thereto the required form by means of stitches, rivets, eyelets, press studs, zip fasteners of the Eclair® closure type, iron wires, arches, rods, staples and/or glue.

13. Method according to claim 11 or 12, **characterised in that,** before or after step c), each cap (1) is attached by snapping onto an attachment element (8) of the press stud type attached to a support.

14. Method according to one of claims 11 to 13, **characterised in that** a structured appearance is conferred to the surface of the coating (13), in particular a wood or stone appearance, preferably by applying layers of material and/or by applying sheets of veneer.

15. Method according to one of claims 11 to 14, **characterised in that** a plurality of covering panels are attached to a support after step b), and then step c) is performed, the coating also filling the joints between the covering panels.

16. Method according to one of claims 11 to 14, **characterised in that** two first covering panels (10a) are attached to a support at a distance from each other, then a third covering panel (10b) is placed over the two first panels (10a), some of its lateral edges overlapping some of the lateral edges of the two first covering panels (10a), the third covering panel (10b) being attached directly to the support by its caps (1) and/or to the two first covering panels (10a) by connection means (16).
